# EUROPEAN PATENT APPLICATION

(11) **EP 4 524 013 A1**
(43) Date of publication of application: **19.03.2025**
(21) Application number: 23198054.1
(22) Date of filing: 18.09.2023
(51) Int. Cl.: B62M 6/45, B62M 6/55, B62M 6/60, B62M 6/65, B62M 6/80, B62M 9/08, B62M 11/14, B62M 11/16, B62M 19/00

(54) **POWERTRAIN FOR A PEDAL VEHICLE, METHOD AND PEDAL VEHICLE**

(71) Applicant: intuEdrive BV, 3360 Bierbeek (BE)
(72) Inventor: Keppens, Tomas, 2800 Mechelen (BE)
(74) Representative: IPLodge bv

(57) **Abstract**

The invention relates to a for a pedal vehicle (1), such as a bicycle, the powertrain (10) configured to transfer an input torque at least partially to a wheel hub (3), the input torque to be applied by a user to a pedal crank structure (2), the powertrain (10) comprising:
the pedal crank structure (2);
a drive device of which a drive (11) is configured to be coupled directly or indirectly to the pedal crank structure (2); and
a control device (13) that is configured to control the drive device, wherein
the control device (13) is configured to control an apparent gear ratio within one revolution of the pedal crank structure (2) by driving the drive device as a function of an angular position of the pedal crank structure (2), which apparent gear ratio is effective between the pedal crank structure (2) and the wheel hub (3), and/or
the control device (13) is configured to receive and/or generate chainring shape data which chainring shape data at least partially defines a shape of a non-circular chainring, to process the chainring shape data and to control a cadence at the pedal crank structure (2) periodically based on processed chainring shape data by controlling the drive device.

## Description

The invention relates to a powertrain for a pedal vehicle, such as a bicycle, the powertrain comprising a drive device and a control device configured to control the drive device. The invention further relates to methods to control a powertrain.

The powertrain may be used in an electrically assisted pedal vehicle, especially bicycle or the like. These vehicles can be propelled conjointly by a human and by force of a drive.

It is an object of the invention to provide solutions where the pedal vehicle is improved in terms of ergonomics. Particularly it is an object to avoid or reduce disadvantages of known solutions.

The object of the invention is solved by the features of the independent claims. Preferred implementations are detailed in the dependent claims.

Thus, the object is particularly solved by a powertrain for a pedal vehicle, such as a bicycle, wherein the powertrain is configured to transfer an input torque at least partially to a wheel hub, and wherein the input torque is to be (i.e./e.g. shall be or can be) applied by a user to a pedal crank structure comprised by the powertrain, the powertrain comprising:
a drive device of which a drive is configured to be coupled directly or indirectly to the pedal crank structure, and especially of which a further drive is configured to be coupled directly or indirectly to the wheel hub for torque transmission with the wheel hub; and
a control device that is configured to control the drive device.

The control device may be configured to control an apparent gear ratio within one revolution of the pedal crank structure by driving the drive device, especially the drive, as a function of an angular position of the pedal crank structure, which apparent gear ratio is effective between the pedal crank structure and the wheel hub. The apparent gear ratio (as the gear ratio physically present between pedal crank structure and wheel hub to be experienced by the user) being variable as a function of the angular position of the pedal crank structure serves to enhance usability/ergonomics, so that gear ratio can be adapted to the torque input from the user, which torque input is by human nature a function of angular position of the pedal crank structure. After all, the powertrain is more suitable to the torque input.

The control device may - alternatively or additionally - be configured to receive and/or generate chainring shape data which chainring shape data at least partially defines a shape of a non-circular chainring, to process the chainring shape data and to control a cadence at the pedal crank structure periodically based on processed chainring shape data by controlling the drive device.

When the control device is 'configured to' or 'configured for' something, it is implied that the control device is specifically constructed, designed or programmed to provide the corresponding feature(s). As such, the control device may comprise computer program means, electrical circuits, software, sensors or the like which do enable the corresponding feature(s). In an analogue manner, a method may be formulated corresponding to features which the control device or the powertrain is configured to provide.

In other words, particularly, a powertrain for a vehicle with pedals is proposed. The powertrain as proposed herein shall comprise a crank shaft or the like configured for pedal cranks, a drive unit including at least one, exactly one, two, exactly two, or more of a/an motor and/or actuator, and furthermore a control unit for the drive unit. The drive unit is typically configured to assist in propulsion, i.e. to transmit an input power (e.g. from the user and/or from a battery or the like) into kinetic energy of the pedal vehicle especially including amendments in a gear ratio effective between pedal crank structure and wheel hub. The drive unit is typically substantially integrated in the mechanical link between the crank shaft or the like (pedal crank structure) and the driven wheel. For example, the drive unit may receive the input torque at least in part and generate electrical power therefrom, preferably which electrical power could be used again for propulsion by means of the drive unit possibly also applying a torque to the wheel hub. As another example, the drive unit may have or may be a shifting device affecting a gear ratio effective in the mechanical link between pedal crank structure and wheel hub. The control unit is specifically provided for controlling the drive unit with respect to affecting or enhancing ergonomics in torque transmission and especially with respect to the gear ratio the user faces. The control unit may for this purpose be designed to drive the drive unit for providing a continuously variable gear ratio between pedal crank structure and wheel hub. For example, a gearbox that can change the effective gear at any position of the crank angle, particularly as per user request and/or as a function of crank angle, and/or according to a chainring shape to be simulated. The control unit may for this purpose alternatively or additionally receive or create information about a/the chainring shape to be simulated, which chainring shape is - deviating from a normal chainring - non-circular. The chainring shape serves as a basis for controlling the cadence at the pedal cranks so that the user may perceive the adoption of a non-circular chainring which enhances ergonomics. This is conducted by accordingly controlling the drive unit.

The object is further solved by a method to control the powertrain as described herein, which method comprises (the steps of):
controlling the drive device based on the chainring shape data, particularly as a function of the processed chainring shape data, in order to control a cadence, and/or
controlling the apparent gear ratio within one revolution of the pedal crank structure by driving the drive device as a function of an angular position of the pedal crank structure.

The method may include, particularly before or after controlling, receiving and/or generating the chainring shape data, and processing the chainring shape data. After controlling, the method may be repeated.

The object is further solved by a pedal vehicle, such as a bicycle, comprising
the powertrain as described herein,
at least one front wheel,
at least one rear wheel, and
pedal cranks coupled to the pedal crank structure, wherein the drive is coupled to the pedal crank structure, wherein a further drive comprised by the drive device is coupled to the wheel hub, and particularly the wheel hub coupled to the further drive is part of the at least one front wheel or the at least one rear wheel.

The proposed solutions are based on the idea that the user may perceive enhanced ergonomics in that he can pedal at an adapted cadence which may correspond to a non-round chainring and/or gear ratio adapted to the crank position although such a non-round chainring is not necessarily physically present. Particularly, the user may pedal at a continuously variable gear radio that varies as a function of the angular position of the pedal crank structure which the user may experience as very ergonomic, typically due to its repetitive character. In other words, the control device seeks to simulate a non-circular/non-round or continuously-variable-gearbox-like chainring feeling to the user in that the user may experience a periodical variance in cadence so that he may make more use of his human power input, e.g. by feet/legs or by hands/arms.

Particularly, the present invention provides that the ergonomics of the pedal vehicle can be enhanced in that a user may be able to increase his power input. The present invention furthermore may provide a more healthy way of cycling which causes less stress to the user and/or his body.

The powertrain may be implemented in and/or a comprise a frame of/for the pedal vehicle.

The pedal vehicle, especially the bicycle, substantially refers to a vehicle with at least two wheels, especially with at least one driven wheel to be driven via the wheel hub. The pedal vehicle may comprise at least one front wheel hub. The pedal vehicle may comprise at least one at least one rear wheel hub. For example, the pedal vehicle may comprise two wheels (a typical bicycle arrangement with a steered front wheel) three wheels (e.g. trike-like with a front wheel and two rear wheels, with the front wheel and/or rear wheels steered) or four wheels (e.g. car-like with two front and two rear wheels, with at least the front or rear wheels steered). The pedal vehicle may be a one, two or multiple user vehicle.

The pedal vehicle is meant as a vehicle to be driven at least partially by means of pedals on pedal cranks. As a common construction, the pedal cranks are mounted directly on the pedal crank structure.

The pedal vehicle is typically meant as an electrically assisted pedal vehicle and/or hybrid vehicle, for example powered by means of both electricity and human power driving the wheel hub(s). The pedal vehicle may be a handbike or handcycle, i.e. driven at least partially by arms and/or hands.

The input torque is typically understood as the torque the user may apply to the pedal cranks stepping continuously thereupon which torque is present at the pedal crank structure. The input torque multiplied by the cadence and/or rotational frequency of the pedal cranks / the pedal crank structure translates to an input power. The powertrain may transfer the input torque at least partially or fully to the wheel hub. The powertrain may receive the input torque and/or input power. The powertrain may store and/or split and/or transmit and/or direct the input torque/power to the wheel hub, at least in part and/or at least time-delayed.

The user is typically understood as a human which can apply the input torque by means of his legs and/or arms.

The wheel hub is typically understood as the rotational center of a wheel to be driven which wheel hub may be substantially fixedly coupled relative to the tire(s) that run on the ground and that may be subject to traction loss.

The drive device is meant to be understood as an arrangement and/or system comprising at least one drive and/or actuator, especially a plurality thereof. The drive device may comprise the drive and optionally the further drive. Even more than two drives may be provided. The drives may be similar drives, especially similar in terms of function (rotational movement, translational movement, combinations thereof, or the like). The drive and/or the further drive may be electrical drives, for example direct current drives, especially motors. The drive and/or the further drive may be configured to provide a force, a torque and/or revolution speed, especially in a controllable manner. The drive device may be able to recuperate electrical energy, i.e. work as a generator, e.g. by means of rotating one of the drives from human power input or from input from the wheel hub in order to brake the pedal vehicle or the like.

The terms `coupling', `coupled to' and/or `coupled with' substantially refer to coupling in a mechanical sense. Said terms typically include and/or imply, but are not limited to, motion-coupled and/or rotationally coupled in order to transfer and/or affect movements based on the coupling.

The pedal crank structure typically comprises or consists of a shaft or pedal crank shaft, especially the shaft configured for connecting/coupling two pedal cranks on opposite sides of the shaft. The pedal cranks are typically arranged substantially in parallel to each other. The pedal cranks are typically arranged oblique, especially substantially perpendicular, to the pedal crank shaft. The pedal cranks especially point in substantially opposite directions (e.g. in case of a bicycle and/or pedal vehicle driven at least by means of legs) or in substantially the same directions (e.g. in case of a hand bike and/or pedal vehicle driven at least by means of arms). The pedal crank shaft is preferably a metal shaft, especially made of steel or aluminum. The pedal crank shaft is preferably a monolithically shaped structure. The pedal crank shaft is typically configured for a separate attachment of the pedal cranks. The invention may provide that a pedal crank structure with different configurations can be realized, for example with pedal or pedals only on one side.

The term 'torque transmission' or 'torque transfer' typically means and/or implies that a rotational connection is given in that torque and especially mechanical power (torque multiplied by revs) can be transmitted between two components.

The control device is preferably built, designed and/or configured to control the drive device. By means of controlling, the drive device may be driven by means of the control device, for example with respect to torque, position, speed/revs and/or the like. The control device may be electrically wired with and/or connected to the drive device. The control device may be connected wirelessly or wired with control means, such as a button and/or a touchscreen to be used by the user. The touchscreen and/or button may be configured to send control commands to the control device, for example to affect the current traction and/or cadence by controlling the drive device.

A battery (or a battery dock for a battery) may be provided, e.g. as a part of the pedal vehicle and/or of the powertrain. The battery may serve to store and to provide electrical energy, especially for driving/controlling the drive device and/or for operating the control device. The drive device may store energy in the battery by means of recuperation. The battery may be removable from the pedal vehicle e.g. for charging the battery. The drive device, the control device and the battery (or a battery dock for the battery) may be wired for transfer of electricity. Typically, a lithium based battery is used.

The chainring shape data can be provided by user input, by user choice from predefined data, and/or by internal processing operation within the control device. The user input may be provided via an interface, e.g. an interface on the pedal vehicle including a display, touchscreen and/or a button, e.g. an interface on a separate device such as a handheld device connected to the control device, e.g. wirelessly by bluetooth, cellular or wifi. The user may choose from different pre-sets as the predefined data. For example, different chainring shape datasets may be provided to be chosen. The user may input different (geometrical) variables that may define the shape of the chainring which is particularly different from a circular shape. The control device may alternatively or additionally generate and/or complete chainring shape data based on riding conditions (e.g. sensed based on sensors or based on data taken from a handheld device, e.g. a smartphone) and/or based on historical data.

With a view to an automatic self-optimization, the control device and/or the method may apply artificial intelligence means, e.g. including computer-implemented neural networks and/or computer-implemented machine learning means, in order to generate and/or complete chainring shape data. The artificial intelligence means may learn based on historical data coming from the use of the powertrain in practice. As such, the control device may comprise the computer-implemented artificial intelligence means. The control device may comprise an infinite number of chainring shape data, wherein the artificial intelligence means may provide further chainring shape data defining at least in part the shape of a non-circular chainring which thus is generated in software and/or on a computer-implemented basis. So it may even be that throughout each individual revolution of the pedal crank structure, the control device may provide slightly or totally different chainring shape data.

Typically, a chainring is a part of a powertrain in a bicycle or pedal vehicle. The chainring typically serves to transfer power from the pedals to the chain, which in turn may drive the wheel hub, e.g. the rear wheel hub. Conventionally, a chainring is round or circular. However, applications of a non-round or non-circular chainring have been made in practice. For example, when the chainring is non-round and serves to drive a round, concentrically rotating (conventional) rear chain pinion, this has effects on the cadence at a constant vehicle speed in that the cadence periodically varies. The size of a chainring (in terms of the number of teeth it has and/or the local radius from the pedal crank structure to the chain) affects the vehicles gearing or gear ratio. A larger chainring (with more teeth or larger diameter) will for example require more force to pedal but will move the bike further with each rotation of the pedals (e.g. it will have a higher gear). Conversely, a smaller chainring will be easier to pedal but will move the bike a shorter distance with each pedal rotation (i.e., it will have a lower gear). The non-round chainring or oval chainring serves to combine a larger and a smaller chainring sectionally.

It is preferred that the powertrain has a chainring. The chainring may be a round chainring or circular chainring for concentric rotation. However, the powertrain may be configured to simulate a non-round chainring or non-circular chainring in that the cadence is periodically varied especially as a function of the angle at the pedal crank structure and especially repetitively each full rotation of the pedal crank structure.

The chainring shape data is typically referred to as a dataset that is about defining at least partially the shape of the non-circular chainring. The shape of a chainring typically concerns the form of the circumference and the position of the rotational center of said chainring. For example, the chainring shape data may comprise geometrical aspects of a non-round shape such as an ellipse or oval. The chainring shape data may comprise a ratio of in the range between 0 and 1 which serves define a variability of the cadence throughout its rotation and/or the ratio of minimum to maximum diameter of the non-round chainring. The chainring shape data may comprise a gear ratio or a ratio of ovality. The chainring shape data is typically additionally about defining signals/commands for driving the drive device so that the cadence is continuously adapted corresponding to the shape.

Processing chainring shape data typically means that the drive device conducts calculations, e.g. by means of an algorithm or a method, in order to gain processed chainring shape data. For example, the chainring shape data may be translated from an input value (e.g. ratio of ovality) to provide the basis for controlling the drive device.

In the context of cycling, cadence typically refers to the rate at which a cyclist or user pedals. More precisely, it's the number of revolutions of the pedal crank structure per minute. The cadency is akin to the rhythm of pedaling. Cadence is often measured in revolutions per minute, or RPM. For example, a cadence of 60 RPM means that one pedal completes a full circle 60 times in a minute. Different users have different preferred or ergonomically optimal cadences, depending on their fitness level, the type of cycling they're doing (for example, road cycling, mountain biking, or time trialing), and personal preference.

In the following, implementations of the invention are described. The implementations may be combined or considered individually. Specific aspects/features described in the context of any of the implementations may be considered individually or in combination. The implementations pursue further optimization of the invention and provide advantages as described herein.

In a first preferred implementation the control device is configured to receive and/or generate the chainring shape data which chainring shape data defines the non-circular chainring to comprise a substantially oval shape. It is preferred that the non-circular chainring is substantially concentric, symmetric and/or is configured to rotate about a center of area especially defining a rotational center of the shape. Substantially oval means a shape that at least reminds of an oval or an ellipse, e.g. an egg-shape or an avocado-shape, or that is an oval or an ellipse. As such, the non-circular chainring may extend along one axis (e.g. major axis) more than along a second axis (e.g. minor axis) which is oblique or perpendicular to the one axis. The non-circular chainring may by symmetric in that it has or consists of two symmetric halves and/or circumferential sections. The non-circular chainring may comprise a stepless and/or steady circumference, at least sectionally, particularly fully.

Another implementation concerns that the user may be disabled or handicapped in that one leg or arm is weaker than the other or even not present. For example, a user may only have one leg or arm to provide the input torque. For example, the input torque may be asymmetric in that per full rotation of the pedal crank structure one peak in torque is substantially larger than the other peak in torque (e.g. by more than 10% or more than 50%). Thus, the user may be able to provide a primary torque and a secondary torque (with his weaker leg or arm) or only a primary torque (in case he only has one leg or arm to pedal with).

Especially with respect to the above-named implementation, the control device may be configured to receive and/or generate the chainring shape data which chainring shape data defines the non-circular chainring to comprise a shape defined by a primary circumferential section for primary torque application by the user, and by at least one of a further circumferential section and a secondary circumferential section arranged circumferentially adjacent to the primary circumferential section. Optionally, there may be a/the secondary circumferential section. The secondary circumferential section may be arranged radially substantially opposite the primary circumferential section for secondary torque application by the user. The secondary circumferential section may be arranged circumferentially adjacent to the further circumferential section. For example there may be two further circumferential sections. It may be that the primary and the secondary circumferential sections are arranged circumferentially adjacent to one another or with the further circumferential section(s) in between.

The primary circumferential section is preferably radially more distant to a/the rotational center of the shape than the further and/or the second circumferential section, for example by at least 10 % on average. If present, the secondary circumferential section is preferably radially more distant to the rotational center of the shape than the further circumferential section, for example by at least 10 % on average.

The circumferential sections are meant to at least partially, typically fully, define the non-circular chainring in shape and/or size. The circumferential sections preferably are stepless and/or steady, especially in a region where circumferential sections are adjacent to one another.

The primary circumferential section is typically meant for primary or maximum torque application of the user, e.g. by means of his stronger or only leg/arm. The secondary circumferential section is typically meant for secondary torque application of the user, e.g. by means of his weaker or handicapped leg/arm. The further circumferential section is typically meant for pedalling action of the user to go forward to the secondary circumferential section or to back to the primary circumferential section.

In other words, with reference to the above-named implementation, particularly, it is suggested that the rotational center of the shape may be located substantially in one extremity of the shape. It may be the focus for one-legged or one-armed cycling or for cycling with asymmetric continuous power of the user's hands/arms to have one single "maximum-torque section" (primary circumferential section) and one" rotate-further-to-come-back-to-maximum-torque-section" (further circumferential section and/or secondary circumferential section). As such, the primary circumferential section may have a higher gear and the further and/or the secondary circumferential section may have a lower gear. Particularly, the primary circumferential section may be configured through the control device to optionally have a larger radius than the secondary and/or the further circumferential section.

In another implementation the control device is configured to receive and/or generate the chainring shape data which chainring shape data comprises an amplitude ratio and a phase. The amplitude and phase define a circumferential section of the non-circular chainring, especially of the substantially oval shape. Said circumferential section may be the primary circumferential section, the secondary circumferential section and/or the further circumferential section. The phase defines an/the angle between a/the major axis of the non-circular chainring and a vertical axis of the pedal crank structure defining top and bottom dead points especially with respect to the user's legs or arms applying the input torque. The amplitude ratio defines a ratio between two peaks or points within the substantially oval shape and/or the circumferential section, especially on the outer circumference thereof. The amplitude ratio typically quantifies the relative difference between minimum and maximum distance to a center of rotation of the non-circular chainring which gives information about the design of the non-circular chainring to be simulated, especially used for controlling the cadence.

In another implementation the the control device is configured to receive and/or generate the chainring shape data, the phase of which chainring shape data is 0±45 degrees, or is 90±45 degrees, or is in the range between 10 and 170 degrees, particularly is in the range between 60 to 120 degrees. The phase individually affects the cadence. The phase may optimize the use of the vehicle in specific terrain. For example, in some cases, a phase of about zero may be better for mountain cycling and/or uneven terrain, wherein a phase between 70 to 110 or of approximately 90 degrees may be better for cycling on streets and/or substantially even terrain. Specific phases also may have a beneficial impact on user health to reduce stress on the human joints of the user.

In another implementation the control device is configured to control the cadence within one revolution of the pedal crank structure by driving the drive device, especially the drive, as a function of an angular position of the pedal crank structure in order to achieve an/the apparent gear ratio which is at least sectionally non-constant over the angular position and/or which corresponds to the chainring shape data.

Controlling the cadence may be conducted periodically throughout multiple revolutions, especially repetitively. In other words, preferably, it is provided that driving the drive device is conducted so that the cadence is affected/manipulated specifically with respect to the rotational position of the pedal crank structure in order to enable a periodically variable gear ratio between pedal crank structure and wheel hub. For example, the drive device may be configured to shift gears and/or affect an/the apparent gear ratio during one revolution, especially periodically over multiple revolutions.

Particularly, the apparent gear ratio at the bottom and top dead centers of the pedal crank structure is lower than the apparent gear ratio between the bottom and top dead centers of the pedal crank structure. It may as well be that the apparent gear ratio is lower between the bottom and top dead centers of the pedal crank structure than at the bottom and top dead centers of the pedal crank structure. The cyclist may thus pedal periodically quicker and slower by means of driving the drive device.

The apparent gear ratio is meant as the gear ratio that the user can experience. For example, according to the invention the user may experience different gear ratios throughout one revolution of the pedal crank structure, especially steplessly and/or continuously variable. This can enable that the user applies a more adapted gear ratio when he can apply more torque (away from top/bottom dead centers) relative to when he can only apply little torque (at top/bottom dead centers of pedal crank structure). This may reduce time of application of little torque so that the overall power may increase and/or ergonomics may enhance.

In another implementation the drive device, particularly the drive, is coupled directly to the pedal crank structure, so that the drive device and the pedal crank structure are fixedly coupled especially in terms of rotation, e.g. via one or more gears, a chain, a belt or via direct attachment. This implementation is meant to imply that the drive device may drive and/or be driven by the pedal crank structure by means of a downright connection. It may be that any movement of the drive device, especially the drive, may cause a movement of the pedal crank structure, and vice versa. For example, the drive device may comprise a gear that meshes with a gear on the pedal crank structure. The drive device, especially its drive and/or further drive, may alternatively or additionally have a stator and a rotor, wherein the rotor is coaxially arranged with and/or mounted on the pedal crank structure, and especially the stator is arranged to drive the rotor, particularly surrounding the rotor.

The drive device is typically configured to assist in propulsion, i.e. to transmit an input power into kinetic energy of the pedal vehicle and especially including amendments in a gear ratio effective between pedal crank structure and wheel hub.

In another implementation the drive device, particularly the drive, is coupled indirectly to the pedal crank structure, so that the drive device and the pedal crank structure at least affect each other in terms of rotation, e.g. allowing a certain slip and/or the drive device affecting a gear ratio, particularly the apparent gear ratio, by its rotation and/or actuation. This implementation is meant to imply that the drive device not necessarily has a downright connection to the pedal crank structure, but may have a connection that is passed through in an intermediate device and/or that is affected in the path to the pedal crank structure. In some embodiments, it may even be that the drive device is or has a gear shifter that shifts gears and thus is indirectly coupled (and particularly with respect to the pedal crank structure rotation) to the pedal crank structure.

In another implementation a power split device with three rotational interfaces (or at least three rotational interfaces or more than three rotational interfaces) is provided. Each of said three rotational interfaces may be coupled directly or indirectly to another component or part. A direct coupling is preferred, e.g. so that one movement directly induces another movement. The three rotational interfaces may be arranged coaxially, parallelly, and/or at an angle with respect to each other. The angle may be 90±45 or 90±5 degrees.

Although in the following it is differentiated between a first/second/third rotational interface, it may be understood that a certain name of "first, second or third interface" can be replaced with another one remaining in the list of the "first, second or third interface". In other words, as an example, if it is written that the first rotational interface is coupled to another component, it may be that the second or third rotational interface can be coupled alternatively or additionally to said component.

The power split device may be coupled with a first rotational interface of the three rotational interfaces to the drive device, particularly to the drive and/or further drive, particularly exclusively to the drive or exclusively to one drive of the drive device. The drive device may be arranged coaxially and/or parallelly to the first rotational interface. The drive device may be arranged coaxially and/or parallelly to the pedal crank structure and/or the first rotational interface, e.g. in order to drive and/or to be driven by the first rotational interface and/or the pedal crank structure, respectively, and/or to brake/stop/accelerate the first rotational interface or pedal crank structure, respectively.

The power split device may be coupled with a second rotational interface of the three rotational interfaces to the pedal crank structure, particularly exclusively to the pedal crank structure. The pedal crank structure may be arranged coaxially and/or parallelly to the second rotational interface, e.g. in order to drive and/or to be driven by the pedal crank structure.

The power split device may be coupled with a third rotational interface of the three rotational interfaces to the wheel hub, particularly exclusively to the wheel hub. The wheel hub may be arranged coaxially and/or parallelly to the third rotational interface, e.g. in order to drive and/or to be driven by the wheel hub.

The power split device may have an epicyclic gear and/or a planetary gearbox. The power split device may alternatively or additionally have a differential. The epicyclic gear, planetary gearbox and/or differential may comprise the three rotational interfaces.

The differential is typically understood as a gear train with three (or more) drive shafts as rotational interfaces. The differential typically has the property that the rotational speed of one shaft is the average of the speeds of the others. A common use of differentials is in vehicles, for example to allow the wheels at each end of a drive axle to rotate at different speeds while cornering. The differential may be used to combine the drive device, the pedal crank structure and the wheel hub for power transmission between each of those.

The planetary gearbox (especially an epicyclic gearbox or a planetary gearset), is a mechanical transmission system. There are typically three core components referred to with letters a), b) and c). a) Sun gear: This is preferably the central gear around which other gears rotate and/or revolve. b) Planetary gears: These are gears that revolve and/or rotate around the sun gear. There are usually two, three or more in number of planetary gears which are mounted on a common planetary carrier. The planetary gears typically revolve around the sun gear (revolution) and rotate on their axes (rotation). c) Ring gear or hollow gear: This is typically an external gear especially surrounding the other gears and with inward-facing or internal teeth that enclose the sun and planetary gears. It is typically larger in diameter, allowing the planetary gears and the sun gear to fit inside its periphery. The operational principle of the planetary gearbox typically relies on the distribution of input (moving), output (moving), and/or stationary (non-moving) designations amongst the sun, planetary gears / planetary carrier, and ring gears. The variation in these designations enables different speed-torque configurations. It is particularly preferred to apply involute gearing in the planetary gearbox. It is furthermore preferred to apply helical gearing in the planetary gearbox. The gears are preferably made of metal, especially steel or aluminum.

Elucidating the function of a planetary gearbox, in a basic configuration, when the sun gear is used as an input, and the planetary carrier is used as an output, the ring gear may be a stationary gear and fixed in place; In this setup, the input rotational speed is reduced while the output torque is increased. Alternatively, if the ring gear is used as an input with the planetary carrier as an output, and the sun gear is held stationary/fixed, the planetary gearbox operates as an increasing gearbox; It increases the rotational speed at the output while reducing the output torque. If the planetary carrier is used as an input and the sun gear as an output, with the ring gear held stationary/fixed, the gearbox behaves as a decreasing gearbox; The output rotational speed is reduced, and the output torque is increased. In a compound configuration, multiple sets of planetary gears (e.g. two or more) can be arranged in series to achieve a higher gear ratio.

It is a preferred option considered throughout the present disclosure to have all three components (sun, planetary carrier, and ring gears) optionally be an input, an output or stationary, especially controlled by means of the control device.

The arrangement of gears and their interaction in an epicyclic gear / a planetary gearbox allows for compact design, high power density, balanced load distribution, and efficient power transmission. Such a configuration is preferred due to high torque transmission, multiple gear ratios, and small size.

One of the three rotational interfaces, especially the first rotational interface, may be a sun gear, especially coupled to the drive device, in particular the drive. As such, the drive device may be configured to drive and/or be driven by the first rotational interface, especially being a sun gear. It is particularly preferred that the drive device may drive the first rotational interface directly, e.g. wherein of the drive device, especially the drive, a rotor is coupled to the first rotational interface and a stator drives or is driven by the rotor. The first rotational interface may especially be arranged parallelly or coaxially with the pedal crank structure, e.g. in that the pedal crank structure runs in the middle of or centric to the first rotational interface.

One of the three rotational interfaces, especially the second rotational interface, may be a ring gear and optionally connected to the pedal crank structure, and optionally connected to the further drive. The ring gear may have internal teeth (e.g. for the planetary gears) and/or external teeth (e.g. for the further drive). The drive device may be configured to drive and/or be driven by the second rotational interface, especially engaging with particularly external teeth of the second rotational interface. It is possible that the drive device drives the second rotational interface directly, e.g. wherein of the drive device, especially the further drive, a rotor is coupled to the second rotational interface and a stator drives or is driven by the rotor. The second rotational interface may be arranged parallelly with the pedal crank structure. The further drive may be coupled via a gear to the second rotational interface, e.g. engaging with teeth of the second rotational interface, especially with teeth arranged on an outside and/or the external teeth. The second rotational interface is typically coupled, e.g. via the internal teeth, to the third rotational interface.

One of the three rotational interfaces, especially the third rotational interface, may comprise a planetary carrier and optionally forming an output structure, e.g. a sprocket section or the like, especially for a direct connection with the wheel hub. The third rotational interface may comprise two or more planetary gears running in parallel with respect to each other. The planetary gears may engage with the second rotational interface and/or the internal teeth. The wheel hub may be configured to drive and/or be driven by the third rotational interface, especially engaging with the second rotational interface. It is particularly preferred that the third rotational interface may drive or be driven by the first rotational interface directly, e.g. wherein the sun gear or first rotational interface meshes with the planetary gears or the third rotational interface.

Particularly, one of the three rotational interfaces, especially the third interface, may have planetary gears or planetary gear elements meshing with the sun gear and the ring gear. First gearwheels of the planetary gear elements may mesh with the sun gear and the ring gear. Alternatively, first gearwheels of the planetary gear elements may mesh with the sun gear (e.g. on one side of the planetary carrier) and second gearwheels of the planetary gear elements may mesh with the ring gear (e.g. on the other side of the planetary carrier). It may as well be that the first gearwheels, and preferably the second gearwheels, are arranged between two sections of the planetary carrier, so that the planetary gears or planetary gear elements are rotatably held within a carrier sandwiching said planetary gears or planetary gear elements. The two or more sections of the planetary carrier may be coupled with each other especially with said planetary gears or planetary gear elements in between. The first gearwheels may be smaller or larger (i.e. different) in diameter relative to the second gearwheels. The first and second gearwheels may be similar in diameter. The first and second gearwheels may run pairwise and coaxially coupled, e.g. supported by and/or beared with a bearing in the planetary carrier.

The rotational interfaces may be any one of a/the sun gear, a/the ring gear and a/the planetary carrier, so that different combinations of the epicyclic gear and/or planetary gearbox with respect to the three rotational interfaces are possible.

It is an option that the drive may serve as a variator motor varying an effective gear ratio by means of driving the first rotational interface, while the further drive may serve as a traction motor providing (additional) torque for propulsion / assistance in propulsion of the pedal vehicle.

In another implementation the drive device has a/the further drive configured to be coupled directly or indirectly to the wheel hub for torque transmission with the wheel hub. The further drive could be an electric drive arranged at the wheel hub to directly drive the corresponding tire. The further drive could be an electric drive arranged distant from the wheel hub to provide torque and/or power to the tire at the wheel hub. When the drive is coupled to the pedal crank structure and the further drive coupled to the wheel hub, a serial hybrid configuration can be achieved in that the drive receives the user input torque (typically in the sense of a generator), which is transmitted as an electrical power to the further drive to drive the wheel hub only based on the electrical power.

In another implementation a first sensor configured to provide sensor data including an angular position of the pedal crank structure, the input torque, a pedal crank structure speed, a pedal vehicle speed, a torque and/or the cadence, which first sensor is typically coupled to the control device for transmission of the sensor data. The first sensor may be a speed, position and/or torque sensor with respect to the pedal crank structure. The control device may thus receive information about the current position, torque and/or speed at the pedals and process the information with respect to enhancing ergonomics, especially affecting the cadence.

A second sensor may be configured to provide sensor data including an angular position of the wheel hub, a torque at the wheel hub, a wheel hub speed and/or a a/the pedal vehicle speed, which second sensor is typically coupled to the control device for transmission of the sensor data. The second sensor may be a speed, position and/or torque sensor with respect to the wheel hub and/or the driven wheel. The control device may thus receive information about the current position, torque and/or speed at the wheel hub and process the information with respect to enhancing ergonomics, especially affecting the cadence.

There may be second sensors on two or more wheel hubs, e.g. on a front wheel hub and on a rear wheel hub.

The control device is preferably configured process the sensor data, especially the sensor data of the first and the second sensors, or the sensor data of one of the first and second sensors, or exclusively of the second sensor, in order to generate the chainring shape data. As such, based on sensory input, the control device may provide information about the grip of the pedal vehicle which may be used for enhancing the grip and/or for increasing the safety and/or for improving the application of human power by adapting the cadence.

The control device may be configured to receive the chainring shape data from a digital user input.

The control device may be configured to generate the chainring shape data as a function of at least one riding condition, particularly where amplitude ratio and/or phase are variable as a function of the at least one riding condition, e.g. the at least one riding condition including the second sensor data (e.g. of the first and/or of the second sensor), a/the pedal vehicle speed, the input torque, a wind speed, a user setting, and/or a terrain inclination.

The control device may be configured to process the chainring shape data in order to infer control commands for the drive device as a function of the chainring shape data and to control the drive device by means of the control commands.

The method may contain the step of receiving a support level, especially from a user input and/or from a predetermined support level which is stored, especially in the control device. The support level may be chosen between zero and 100 %, especially wherein zero means no support in torque may be applied to the wheel hub and 100 % means a predetermined maximum possible torque or assistance factor may be applied to the wheel hub for providing support to the user, especially wherein the predetermined maximum possible torque is adapted to a legal limit, e.g. a maximum of 400% of the user power input may be provided by the drive device. The support level may comprise an eco, normal or turbo mode or the like. The support level may comprise a comfort or a sport mode or the like. Particularly, depending on riding conditions, like the speed of the pedal vehicle, the input torque, the wind speed, a user setting and/or the terrain inclination, a certain power may be necessary to be provided in sum by the user and the drive device. Taking into account the support level and the riding conditions, the drive device may control the apparent gear ratio.

Controlling the drive device may be conducted taking into account the support level, e.g. in that the maximum torque of the drive device is reduced accordingly.

Controlling the drive device may be conducted taking into account the support level, e.g. in that the chainring shape data is generated as a function of the support level.

The method may contain the step of receiving a speed of the wheel hub and/or of the pedal vehicle and/or of the pedal crank structure (especially the cadence). Controlling the drive device may be conducted taking into account said speed, e.g. in that generating the chainring shape data is conducted based on said speed. For example, different chainring shape data may be generated as a function of said speed, e.g. in terms of amplitude ratio and/or phase or the like.

These and other aspects of the invention will be apparent from and elucidated with reference to the implementations / embodiments described hereinafter.

In the light of the present disclosure the word 'or' may be understood as and replaced by 'and/or'.

In the drawings:
Fig. 1 shows a pedal vehicle with a powertrain configured to transfer an input torque to a wheel hub in a side view;
Fig. 2 shows a powertrain including a power split device in a sectional view through a pedal crank structure, the power split device and a drive device;
Fig. 3 shows a pedal vehicle with a powertrain including a drive device with two drives, wherein one drive is coupled to a pedal crank structure and a further drive is coupled to a wheel hub.
Fig. 4 shows a powertrain of a pedal vehicle with an oval chainring according to prior art which the present invention seeks to simulate by drive control.

### Description of implementations

The description contains procedural or methodical aspects upon describing structural features of the drive; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context.

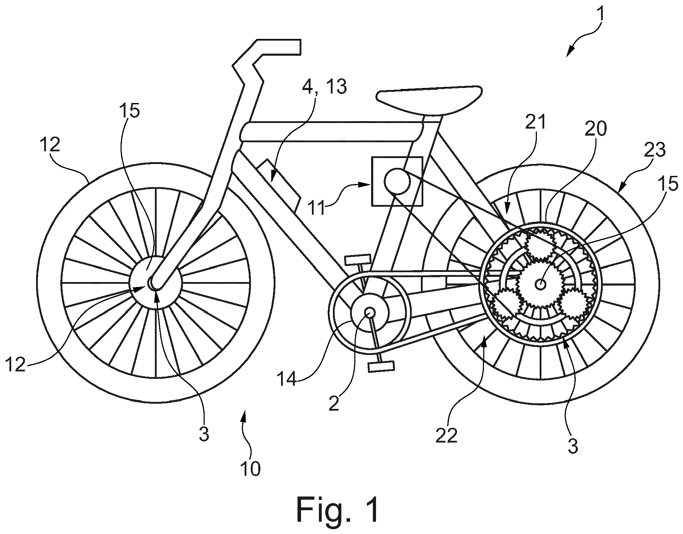

In Fig. 1, a first implementation of the present invention is shown. The shown pedal vehicle 1 in the form of a bicycle has a powertrain 10. The powertrain 10 is configured to transfer an input torque applied by a user at least partially to a wheel hub 3, especially to two wheel hubs 3 as there is a front wheel hub 3 and a rear wheel hub 3.

The input torque can be applied to a pedal crank structure 2, e.g. via the feet of the user to pedals of the pedal crank structure 2, and then transmitted in the form of power via a chain or belt and via a power split device 20 to the rear wheel hub 3. A chainring for engagement with the chain or belt is mounted to rotate coaxially with the pedal crank structure 2.

The wheel hubs 3 are part of the powertrain 10 and/or of the pedal vehicle 1. The powertrain 10 has a drive device of which a drive 11 is coupled indirectly to the pedal crank structure 2 which has the pedal cranks.

The drive 11 essentially serves as a variator motor varying an effective gear ratio as a function of rotational speed of the drive 11. Furthermore, drive 11 thereby assists in applying power to the rear wheel hub 3.

A further drive 12 of the drive device is coupled directly to the wheel hub 3 at the front wheel for torque transmission with the front wheel.

A battery 4 serves to store and to provide electrical energy, especially for driving/controlling the drive device. The drive device may store energy in the battery 4 by means of recuperation. The battery 4 may be removable from the pedal vehicle 1 for charging the battery 4.

The powertrain 10 furthermore has a control device 13, which control device 13 is configured to control an apparent gear ratio that is effective between the pedal crank structure 2 and the wheel hub 3. The apparent gear ratio can be controlled within one revolution of the pedal crank structure 2 by driving the drive device, particularly the drive 11, as a function of an angular position of the pedal crank structure 2. Thus, the apparent gear ratio can be varied as a function of the angular position of the pedal crank structure 2 as desired. The apparent gear ratio may be varied in order to simulate the feeling of a non-circular or oval chainring in that the cadence is varied as a function of angular position of the pedal crank structure 2 periodically.

The control device 13 is furthermore configured to receive and to generate chainring shape data.

The chainring shape data mathematically defines a shape of a non-circular chainring, which non-circular chainring is imaginary (i.e. to be simulated within the powertrain 10) and in the present case not a physical part of the pedal vehicle 1.

The control device 13 is configured to process the chainring shape data and to control a cadence at the pedal crank structure 2 periodically based on processed chainring shape data.

The cadence can be controlled by controlling the drive 11 of the drive device by adapting the speed of the drive 11 as a function of the angular position of the pedal crank structure 2. For example, the speed of the drive 11 may be chosen as a sinus-wave so that the speed periodically bounces between a minimum and a maximum value, wherein one period corresponds to exactly one rotation of the pedal crank structure 2. In this way, an effective gear ratio can be be varied which thus varies the cadence periodically.

The chainring shape data defines the non-circular chainring to comprise an oval or a substantially oval shape and to rotate about a center of area.

The shape or substantially oval shape may be defined by a primary circumferential section, a further circumferential section and a secondary circumferential section. The primary circumferential section may be radially more distant to a rotational center of the shape than the further and the second circumferential section. The circumferential sections may fully define the non-circular chainring in shape and/or size. The circumferential sections can be stepless and steady. The primary circumferential section is configured for primary torque application of the user by means of his stronger leg. The secondary circumferential section is configured for secondary torque application of the user by means of his weaker or handicapped leg.

Furthermore, the chainring shape data comprises an amplitude ratio and a phase defining the oval shape, particularly all of its adjacent circumferential sections. The phase defines the angle between a major axis of the non-circular chainring and a vertical axis of the pedal crank structure 2 defining top and bottom dead points. The amplitude ratio defines a ratio between two peaks within the oval shape and the full circumferential section / all circumferential sections.

In some implementations, the amplitude ratio may be the ratio between radius of the primary circumferential section and the radius of the secondary circumferential section, wherein the corresponding radius is in each case the average distance to the rotational center.

The control device 13 is configured to receive and to generate the chainring shape data with a phase chosen in the range between 0 and 180 degrees.

The control device 13 can control the cadence within one revolution of the pedal crank structure 2 by driving the drive 11 periodically and as a function of an angular position of the pedal crank structure 2. This achieves an/the apparent gear ratio sectionally non-constant over the angular position of the pedal crank structure 2.

The apparent gear ratio thus corresponds to the chainring shape data. Concurrently it is selected that the apparent gear ratio at the bottom and top dead centers of the pedal crank structure 2 is lower than the apparent gear ratio between the bottom and top dead centers of the pedal crank structure 2.

It may be that the drive 11, or the further drive 12, or the drive 11 and the further drive 12 are controlled, especially simultaneously. The control device 13 is optionally configured to deactivate the drive 11 and/or the further drive 12.

The drive device is configured to assist in propulsion, i.e. to transmit an input power into kinetic energy of the pedal vehicle 1 including amendments in a gear ratio effective between pedal crank structure 2 and wheel hub 3 at least at the rear wheel.

In the present embodiment the drive 11 is not coupled directly to the pedal crank structure 2, but is coupled indirectly to the pedal crank structure 2 via a chain coupled to a power split device 20 and another chain coupled to the power split device 20 and the pedal crank structure 2. The drive device and the pedal crank structure 2 may affect each other in terms of rotation, e.g. the drive device affecting a gear-ratio by rotation of the drive at the power split device 20. The drive device does not have a downright connection to the pedal crank structure 2.

The power split device 20 has three rotational interfaces 21, 22, 23. Each of the three rotational interfaces 21, 22, 23 are coupled to another component or part. The rotational interfaces 21, 22, 23 are arranged coaxially.

The power split device 20 is coupled with a first rotational interface 21 (a planetary carrier or sun gear, as an example) exclusively and here via a chain or belt to the drive 11. The drive device is arranged to rotate in parallel to the first rotational interface 21. The drive device is arranged to rotate in parallel to the pedal crank structure 2 and the first rotational interface 21.

The power split device 20 is coupled with a second rotational interface 22 (a sun gear or ring gear, as an example) exclusively and here via a chain or belt to the pedal crank structure 2. The pedal crank structure 2 is arranged parallelly to the second rotational interface 22.

The power split device 20 is coupled with a third rotational interface 23 (a ring gear or planetary carrier, as an example) to the wheel hub 3 at the rear wheel, particularly exclusively. The wheel hub 3 is arranged in parallel to the third rotational interface 23. In particular, the third rotational interface 23 forms the wheel hub 3 at the rear wheel.

The power split device 20 is epicyclic gear and/or a planetary gearbox comprising the three rotational interfaces 21, 22, 23. The three rotational interfaces 21, 22, 23 can optionally be an input, an output or stationary, especially controlled by means of the control device 13.

In the embodiment of Fig. 1, the power split device 20 is configured to uncouple the pedal crank structure 2 from the (rear) wheel hub 3. This may be realized by shutting of the drive 11 so that the drive 11 spins freely. As such, all rotational input from the user (and as well that from the wheel hub 3 at the rear wheel) would be directed to the first rotational interface 21 spinning the drive 11.

A first sensor 14 is configured to provide sensor data including a cadence and an angular position of the pedal crank structure 2, which first sensor 14 is coupled to the control device 13 for transmission of the sensor data. The first sensor 14 is a speed and angular sensor arranged at the pedal crank structure 2. The control device 13 can receive information about the current speed and angle at the pedals and process the information with respect to generate the chainring shape data.

A second sensor 15 is configured to provide sensor data including a speed of the rear wheel hub 3 and is coupled to the control device 13 for transmission of the sensor data. Another second sensor 15 is located at the front wheel hub 3. The second sensors 15 are a speed sensors with respect to the wheel hubs 3 and thus the driven wheels and/or all wheels. The control device 13 can receive information about the current speeds at the rear wheel hub 3 and/or the front wheel hub 3 and process the information. For example, the current speed may be estimated or measured by means of the rotational speed of the drive device. The control device 13 is configured process the sensor data of the first 14 and the second sensors 15 in order to generate the chainring shape data.

The control device 13 is configured to receive the chainring shape data from a digital user input in that the user may choose from chainring shape data on an interface, e.g. on a smartphone or on a computer of the vehicle.

The control device 13 is configured to generate the chainring shape data as a function of riding conditions. The amplitude ratio and the phase can be variable as a function of the riding conditions, which riding conditions include the sensor data (of the first sensor and/or the second sensor), the speed of the pedal vehicle, the input torque, the wind speed, a user setting and the terrain inclination.

The control device 13 is configured to process the chainring shape data in order to infer control commands for the drive device as a function of the chainring shape data and to control the drive device by means of the control commands. In other words, the control device 13 can translate information about a non-circular chainring into control commands for the drive device with the purpose to simulate to the user the non-circular chainring in the powertrain 10 in that the cadence is variable periodically.

The embodiment of Fig. 1 provides that a method to control the powertrain 10 can be conducted, especially by means of the control device 13. The method comprises (the steps of): receiving and/or generating the chainring shape data and the cadence; processing the chainring shape data; and controlling the drive device based on the chainring shape data as a function of the processed chainring shape data in order to control the cadence.

The embodiment of Fig. 1 also provides that another method to control the powertrain 10 can be conducted, especially by means of the control device 13. The method comprises (the step of): controlling the apparent gear ratio within one revolution of the pedal crank structure 2 by driving the drive device as a function of an angular position of the pedal crank structure 2. Both of the above method may be conducted simultaneously. The methods may complement each other and/or can essentially result similarly in controlling the cadence.

The control device 13 can optionally control only one or at least one of the drive 11 and the further drive 12. The drive 11 or further drive 12 can be controlled for example before or after the other one of the drive 11 and further drive 12. Also, one of the drive 11 and the further drive 12 can be controlled and the other one of the drive 11 and further drive 12 can be deactivated.

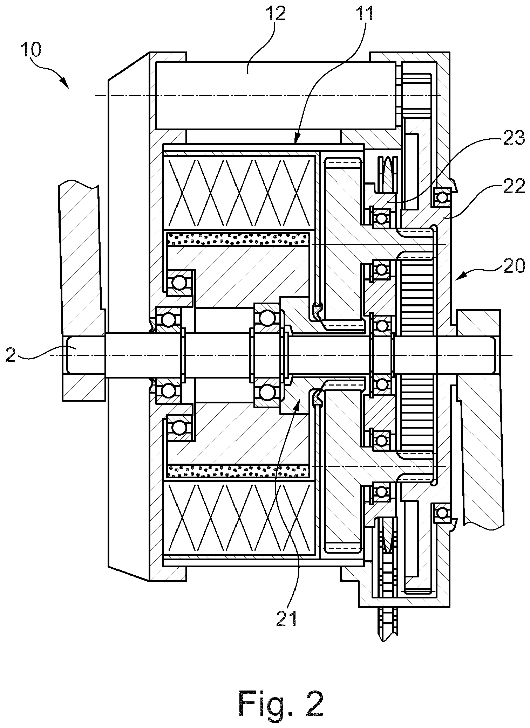

Fig. 2 shows another embodiment of a powertrain 10 for a pedal vehicle 1 configured to transfer an input torque applied by a user to a (not shown) wheel hub. The powertrain 10 has a drive device with a drive 11 and a further drive 12. The drives 11, 12 are electrical drives or motors each of which may optionally be operated as a generator for recuperation of energy and/or for providing resistance torque or the like. The drive 11 is coupled indirectly via a power split device 20 to a pedal crank structure 2. The further drive 12 is thus coupled indirectly via the power split device 20 to the wheel hub.

The power split device 20 has three rotational interfaces 21, 22, 23. The first rotational interface 21 is coupled directly to the drive 11. The second rotational interface 22 is coupled directly to the pedal crank structure 2. The third rotational interface 23 is coupled directly (typically with a chain or belt) to the wheel hub 3.

The first rotational interface 21 is a sun gear coupled to a rotor of the drive 11. As such, the drive 11 is configured to drive and/or be driven by the sun gear. The drive device can thus drive the sun gear directly. The sun gear is arranged coaxially with the pedal crank structure 2. The pedal crank structure 2 runs in the middle of or centric to the sun gear.

The second rotational interface 22 is a ring gear and connected not only directly to the pedal crank structure 2, but also directly to the further drive 12 to be driven by and to drive the further drive 12. The ring gear has internal teeth and external teeth arranged coaxially with respect to each other. The further drive 12 engages with the external teeth. The ring rear is arranged coaxially with the pedal crank structure 2, wherein the pedal crank structure 2 runs in the middle of or centric to the ring gear. The ring gear is coupled via the internal teeth to the third rotational interface 23.

The third rotational interface 23 has a planetary carrier with at least two planetary gear elements and forming an output structure with a sprocket section for a direct coupling or connection with the wheel hub. The planetary gear elements run in parallel with respect to each other. The planetary gear elements engage with the ring gear (internal teeth). The third rotational interface can drive or can be driven by the sun gear directly. The sun gear meshes with the planetary gear elements.

Here, first gearwheels of the planetary gear elements mesh with the sun gear and second gearwheels of the planetary gear elements mesh with the ring gear. The first gearwheels are larger in diameter relative to the second gearwheels. The first and second gearwheels run pairwise and coaxially coupled, especially supported by and beared with bearings in the planetary carrier.

Here, the drive 11 essentially serves as the variator motor varying the effective gear ratio by means of driving the first rotational interface 21 or sun gear, while the further drive 12 may serve as a traction motor providing (additional) torque for propulsion / assistance in propulsion of the pedal vehicle 1.

The drive device typically comprises electric motors as drives 11, 12. For example, DC motors may be adopted in the powertrain 10.

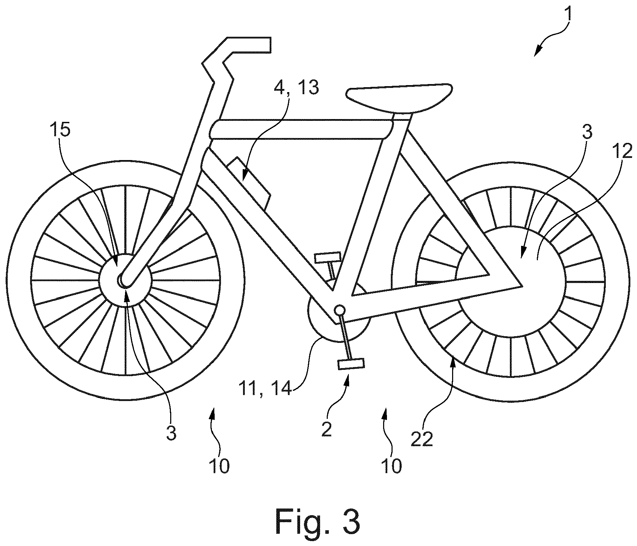

In Fig. 3 another implementation of the present invention is shown. The shown pedal vehicle 1 in the form of a bicycle has a powertrain 10 in a serial hybrid configuration.

The powertrain 10 is configured to transfer an input torque applied by a user at least partially to a wheel hub 3, especially to a rear wheel hub 3. The powertrain has a drive device with a drive 11 and a further drive 12. The drive 11 is coupled directly to a pedal crank structure 2 to directly receive the input torque. The drive 11 serves to convert the mechanical power applied by a user (input torque multiplied by cadence) into electric power / electricity / electric energy. The electric power can be directed to a battery 4 and/or to the further drive 12.

The battery 4 serves to store and to provide electrical energy, especially for driving/controlling the drive device. The drive device may store energy in the battery 4 by means of recuperation.

The further drive 12 is coupled directly to the rear wheel hub 3 to drive a rear tire or rear wheel substantially based on the electric power generated at the drive 11. The further drive 12 may alternatively or additionally be provided electric power from a battery 4.

The powertrain 10 furthermore has a control device 13, which control device 13 is configured to receive and to generate chainring shape data. The chainring shape data mathematically defines a shape of a non-circular chainring, which non-circular chainring is imaginary (i.e. to be simulated within the powertrain 10) and in the present case not a physical part of the pedal vehicle 1.

The control device 13 is configured to process the chainring shape data and to control a cadence at the pedal crank structure 2 periodically based on processed chainring shape data. The control device 13 may receive sensor data from a sensor 15, here located at the front wheel, and/or from a sensor 14 at the pedal crank structure 2. Particularly, the drive 11 and/or further drive 12 may be used as a sensor to provide sensor data.

The cadence can be controlled by controlling the drive 11 of the drive device by adapting the speed of the drive 11 as a function of the angular position of the pedal crank structure 2. For example, the speed of the drive 11 may be chosen as a sinus-wave so that the speed periodically bounces between a minimum and a maximum value, wherein one period corresponds to exactly one rotation of the pedal crank structure 2. In this way, an effective gear ratio can be be varied which thus varies the cadence periodically.

The powertrain 10 of Fig. 3 can be understood as a drive-by-wire powertrain. As such, there is no physical/mechanical coupling between the drive 11 and further drive 12 in terms of rotation, but there is rather an electrical coupling in terms of electrical power transmission. The electrical power transmission may be guided via the control device 13. The control device 13 can thus easily control the cadence based on the processed chainring shape data by driving the drive 11 and the torque at the rear wheel by driving the further drive 12. This enhances ergonomics.

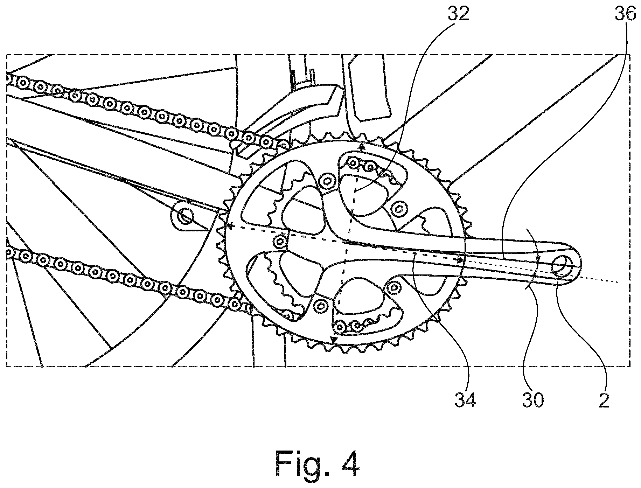

In Fig. 4 a part of a powertrain is shown that makes use of an oval chainring as a non-circular chainring, the oval chainring being a physical component. The chainring has a minor axis 32 perpendicular to a major axis 34 which substantially reflects an ellipse or oval. The major axis 34 makes up with a vertical axis 36 of a pedal crank structure 2 a phase 30 with an angle of below 5 degrees. Although the invention described herein does not comprise an oval chainring as a physical component as shown in Fig. 4, Fig. 4 shall serve to elucidate the shape of a chainring that the present invention is capable to adopt / simulate to the user in practice.

Not shown is an implementation of a powertrain including a power split device with three rotational interfaces. In this implementation,
a drive is coupled to a sun gear as a first rotational interface,
a pedal crank structure is coupled to a planetary carrier as a second rotational interface, and
a wheel hub is coupled to a ring gear as a third rotational interface.

In this configuration, the drive needs to run in an opposite direction relative to the pedal crank structure to give positive power from drive and pedal crank structure to the wheel hub.

Not shown is another implementation of a powertrain including a power split device with three rotational interfaces. In this another implementation,
a drive is coupled to a sun gear as a first rotational interface,
a wheel hub is coupled to a planetary carrier as a second rotational interface, and
a pedal crank structure is coupled to a ring gear as a third rotational interface.

In this configuration, the drive needs to run in the same direction relative to the pedal crank structure to give positive power from drive and pedal crank structure to the wheel hub.

### Reference signs list

- 1: pedal vehicle
- 2: pedal crank structure
- 3: wheel hub
- 4: battery

- 10: powertrain
- 11: drive
- 12: further drive
- 13: control device
- 14: sensor
- 15: sensor

- 20: power split device
- 21: rotational interface
- 22: rotational interface
- 23: rotational interface

- 30: phase
- 32: minor axis
- 34: major axis
- 36: vertical axis

## Claims

1. Powertrain (10) for a pedal vehicle (1), such as a bicycle, the powertrain (10) configured to transfer an input torque at least partially to a wheel hub (3), the input torque to be applied by a user to a pedal crank structure (2), the powertrain (10) comprising:
the pedal crank structure (2);
a drive device of which a drive (11) is configured to be coupled directly or indirectly to the pedal crank structure (2); and
a control device (13) that is configured to control the drive device, wherein
the control device (13) is configured to control an apparent gear ratio within one revolution of the pedal crank structure (2) by driving the drive device as a function of an angular position of the pedal crank structure (2), which apparent gear ratio is effective between the pedal crank structure (2) and the wheel hub (3), and/or
the control device (13) is configured to receive and/or generate chainring shape data which chainring shape data at least partially defines a shape of a non-circular chainring, to process the chainring shape data and to control a cadence at the pedal crank structure (2) periodically based on processed chainring shape data by controlling the drive device.

2. Powertrain (10) according to the preceding claim, wherein the control device (13) is configured to receive and/or generate the chainring shape data which chainring shape data defines the non-circular chainring to comprise a substantially oval shape, particularly wherein the non-circular chainring is substantially concentric, symmetric and/or is configured to rotate about a center of area.

3. Powertrain (10) according to one of the preceding claims, wherein
the control device (13) is configured to receive and/or generate the chainring shape data which chainring shape data defines the non-circular chainring to comprise a shape defined by a primary circumferential section for primary torque application by the user, and by at least one of a further circumferential section or a secondary circumferential section arranged circumferentially adjacent to the primary circumferential section,
preferably the primary circumferential section being radially more distant to a rotational center of the shape than the further circumferential section.

4. Powertrain (10) according to one of the preceding claims, wherein the control device (13) is configured to receive and/or generate the chainring shape data which chainring shape data comprises an amplitude ratio and a phase (30) defining a circumferential section of the shape of the non-circular chainring, especially the primary, secondary and/or further circumferential section, wherein the phase (30) defines the angle between a major axis of the non-circular chainring and a vertical axis of the pedal crank structure (2) defining top and bottom dead points, and wherein the amplitude ratio defines a ratio between two peaks within the shape of the non-circular chainring and/or the circumferential section.

5. Powertrain (10) according to the preceding claim, wherein the control device (13) is configured to receive and/or generate the chainring shape data, the phase (30) of which chainring shape data is 0±45 degrees, or is 90±45 degrees, or is in the range between 10 and 170 degrees, particularly is in the range between 60 to 120 degrees.

6. Powertrain (10) according to one of the preceding claims, wherein
the control device (13) is configured to control the cadence within one revolution of the pedal crank structure (2) by driving the drive device, especially the drive (11), as a function of an angular position of the pedal crank structure (2) in order to achieve an/the apparent gear ratio which is at least sectionally non-constant over the angular position and/or which corresponds to the chainring shape data.

7. Powertrain (10) according to one of the preceding claims, wherein
the control device (13) is configured to control the cadence within one revolution of the pedal crank structure (2) by driving the drive device, especially the drive (11), as a function of an angular position of the pedal crank structure (2) in order to achieve an/the apparent gear ratio which is non-constant over the angular position and/or which corresponds to the chainring shape data, and
the apparent gear ratio at the bottom and top dead centers of the pedal crank structure (2) is lower than the apparent gear ratio between the bottom and top dead centers of the pedal crank structure (2).

8. Powertrain (10) according to one of claims 1 to 7, wherein the drive device, particularly the drive (11), is coupled directly to the pedal crank structure (2), so that the drive device and the pedal crank structure (2) are fixedly coupled in terms of rotation, e.g. via one or more gears, a chain, a belt or via direct attachment.

9. Powertrain (10) according to one of claims 1 to 7, wherein the drive device, particularly the drive (11), is coupled indirectly to the pedal crank structure (2), so that the drive device and the pedal crank structure (2) at least affect each other in terms of rotation, e.g. allowing a certain slip and/or the drive device affecting a gear ratio, particularly the apparent gear ratio, by its rotation and/or actuation.

10. Powertrain (10) according to claim 9, wherein a power split device (20) with three rotational interfaces (21, 22, 23) is provided, which power split device (20) is coupled
with a first rotational interface (21) of the three rotational interfaces (21, 22, 23) to the drive device, particularly the drive (11), and
with a second rotational interface (22) of the three rotational interfaces (21, 22, 23) to the pedal crank structure (2), and
with a third rotational interface (23) of the three rotational interfaces (21, 22, 23) to the wheel hub (3).

11. Powertrain (10) according to the preceding claim, wherein the power split device (20) has an epicyclic gear, a planetary gearbox or a differential comprising the three rotational interfaces (21, 22, 23).

12. Powertrain (10) according to one of the preceding two claims, wherein
the first rotational interface (21) is a sun gear,
the second rotational interface (22) is a ring gear and is optionally connected to a further drive (12) comprised by the drive device, and
the third rotational interface (23) is a planet carrier forming an output structure, e.g. a sprocket section, and having planetary gear elements meshing with the sun gear and the ring gear wherein optionally
first gearwheels of the planetary gear elements mesh with the sun gear and second gearwheels of the planetary gear elements mesh with the ring gear and e.g.
the first and second gearwheels are different in diameter.

13. Powertrain (10) according to one of the preceding claims, wherein the drive device has a/the further drive (12) configured to be coupled directly or indirectly to the wheel hub (3) for torque transmission with the wheel hub (3).

14. Powertrain (10) according to one of the preceding claims, comprising
a first sensor (14) configured to provide sensor data including an angular position of the pedal crank structure (2), the input torque, a pedal crank structure speed, a pedal vehicle speed, a torque and/or the cadence, wherein the first sensor (14) is coupled to the control device (13) for transmission of the sensor data, and/or
a second sensor (15) configured to provide sensor data including an angular position of the wheel hub (3), a torque at the wheel hub (3), a wheel hub speed and/or a/the pedal vehicle speed, wherein the second sensor (15) is coupled to the control device (13) for transmission of the sensor data, particularly wherein the control device (13) is configured to process the sensor data in order to generate the chainring shape data.

15. Powertrain (10) according to one of the preceding claims, wherein the control device (13) is configured to
- receive the chainring shape data from a digital user input, and/or
- generate the chainring shape data as a function of at least one riding condition, particularly where amplitude ratio and/or phase (30) are variable as a function of the at least one riding condition, e.g. the at least one riding condition including the sensor data, a/the pedal vehicle speed, the input torque, a wind speed, a user setting, and/or a terrain inclination, and/or
- process the chainring shape data in order to infer control commands for the drive device as a function of the chainring shape data and to control the drive device by means of the control commands.

16. Method to control the powertrain (10) according to one of the preceding claims, comprising
controlling the drive device based on the chainring shape data, particularly as a function of the processed chainring shape data, in order to control a cadence; and/or
controlling the apparent gear ratio within one revolution of the pedal crank structure (2) by driving the drive device as a function of an angular position of the pedal crank structure (2).

17. Pedal vehicle (1), such as a bicycle, comprising the powertrain (10) of one of claims 1 to 15, at least one front wheel, at least one rear wheel, and pedal cranks coupled to the pedal crank structure (2), wherein the drive (11) is coupled to the pedal crank structure (2), wherein a further drive (12) comprised by the drive device is coupled to the wheel hub (3), particularly wherein the wheel hub (3) coupled to the further drive (12) is part of the at least one front wheel or the at least one rear wheel.
